# EUROPEAN PATENT APPLICATION

(11) **EP 4 303 262 A1**
(43) Date of publication of application: **10.01.2024**
(21) Application number: 22183511.9
(22) Date of filing: 07.07.2022
(51) Int. Cl.: C08L 11/00, C09J 111/00

(54) **WATER-BASED COMPOSITION BASED ON POLYCHLOROPRENE DISPERSIONS**

(71) Applicant: Henkel AG & Co. KGaA, 40589 Düsseldorf (DE)
(72) Inventor: Borole, Dinesh, 400607 Thane (IN); Kapadia, Jitendra, 400051 Mumbai, Maharashtra (IN)

(57) **Abstract**

The present invention relates to a water-based composition comprising a blend of aqueous polychloroprene dispersions, at least one aqueous tackifier resin dispersion, and at least one aqueous silicon dioxide dispersion, a process for preparing said composition, an adhesive comprising said composition, and the use of said composition as adhesive.

## Description

The present invention relates to water-based composition comprising a blend of aqueous polychloroprene dispersions, at least one aqueous tackifier resin dispersion, and at least one aqueous silicon dioxide dispersion, a process for preparing said composition, an adhesive comprising said composition, and the use of said composition as adhesive.

Contact adhesives are traditionally based on solvent-based formulations, e.g., based on polychloroprene. These solvent-based adhesives have been widely used as they can bond various substrates such as EPE foam to Solid wood, Nylon to PU foam, Hardboard to Rexin, EPE to PU foam, PU to memory foam and memory to memory foam. However, the traditional solvent-based polychloroprene adhesives have the disadvantage of having high volatile organic compound (VOC) emissions upon drying and thus are toxicologically and environmentally undesirable. An odor from the application of these solvent-based adhesives is also hazardous to human being. In addition, cleaning of the solvent-based adhesives requires solvent, which is also not friendly for work environment.

Hence, water-based adhesives comprising a polychloroprene dispersion which do not have VOCs and odor are acquiring increasing technical and economic significance. They are toxicologically and ecologically safer than solvent-based adhesive. Water-based adhesives development has taken a shift towards more and more sustainable solutions which support health and safety as well as reduce environmental impact. Being environmentally friendly and low VOC, water-based adhesive systems are also user friendlier compared to alternative solutions as applying water-based adhesives does not require as many safety measures as systems that contain solvents, which can improve efficiency depending on the nature of the project. Additionally, the finished products that are bonded using aqueous adhesives are user friendly: water-based adhesives do not bring along great health risk, nor do they release toxic or odorous fumes.

For example, US 8,118,969 B2 and US 9,040,438 B2 disclose water-based adhesives comprising polychloroprene dispersions.

However, existing systems have the drawbacks of decreased bonding performance compared to solvent-based adhesives and long drying times. There exists need in the art for alternative formulations that overcome these drawbacks.

Therefore, the object of the present invention is to provide ecologically and environmentally friendly adhesive compositions which show good adhesion properties on various substrates.

It has been found surprisingly that the adhesive properties of the water-based composition can be improved by combining a blend of aqueous polychloroprene dispersions, a tackifier resin dispersion and a silicon dioxide dispersion.

In a first aspect, the present invention thus relates to a water-based composition comprising:
(a) at least one aqueous polychloroprene dispersion with a high rate of crystallization in an amount of 15 to 35 wt. % based on the total weight of the composition;
(b) at least one aqueous polychloroprene dispersion with a medium or low rate of crystallization in an amount of 10 to 30 wt. % based on the total weight of the composition;
(c) at least one aqueous tackifier resin dispersion in an amount of 10 to 30 wt. % based on the total weight of the composition; and
(d) at least one aqueous silicon dioxide dispersion in an amount of 15 to 45 wt. % based on the total weight of the composition.

The adhesive composition according to the present invention provides good adhesive properties and immediate wet tack to hold the applied substrate. After applied on substrates the product has good strong hold. After drying of adhesive within 20 mins, fiber tear can be observed.

The present invention is further directed to a process for preparing the water-based composition as defined herein.

Yet a further aspect of the present invention is directed to an adhesive comprising the water-based composition.

In addition, the present invention is directed to use of the water-based composition as adhesive.

As used herein, the singular forms "*a*", "*an*" and "*the*" include plural referents unless the context clearly dictates otherwise.

The term "*at least one*," as used herein, means 1 or more, i.e., 1, 2, 3, 4, 5, 6, 7, 8, 9, or more. With reference to an ingredient, the indication refers to the type of ingredient and not to the absolute number of molecules. "*At least one polymer*" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms *"comprising", "comprises"* and *"comprised o*f*"* as used herein are synonymous with *"including", "includes", "containing"* or *"contains",* and are inclusive or open-ended and do not exclude additional, non-recited members, elements or method steps. If used, the phrase *"consisting of*" is closed and excludes all additional elements. Further, the phrase *"consisting essentially of* excludes additional material elements but allows the inclusion of non-material elements that do not substantially change the nature of the invention.

The term "about", as used herein in relation to numerical values means the referenced value ±5%.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words *"preferred", "preferably", "desirably"* and *"particularly",* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"can"* or *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

### Aqueous polychloroprene dispersions (a) and (b)

The water-based composition according to the invention comprises a blend of aqueous polychloroprene dispersions, i.e., a blend of (a) at least one aqueous polychloroprene dispersion with a high rate of crystallization and (b) at least one aqueous polychloroprene dispersion with a medium or low rate of crystallization.

The rate of crystallization of the polychloroprene dispersion is determined by relative classification according to Shore A hardness, measured by DIN 53541. As used herein, the polychloroprene dispersion with a high rate of crystallization has Shore A Hardness of greater than or equal to about 60; the polychloroprene dispersion with a medium rate of crystallization has Shore A Hardness lower than about 60 and higher than about 40; and the polychloroprene dispersion with a low rate of crystallization has Shore A Hardness lower than or equal to about 40.

The water-based composition according to the invention comprises 15 to 35 wt.%, preferably 20 to 30 wt.%, of at least one aqueous polychloroprene dispersion with a high rate of crystallization (a), based on the total weight of the composition.

The higher rate of crystallization relates to the quick grab of the adhesive. If the composition comprises more than 35 wt. % of the polychloroprene dispersion (a), it dries too fast which leads to nozzle chocking during application. If the composition comprises less than 15 wt. % of the polychloroprene dispersion (a), it dries too slow which leads to a slower bond development. Then it takes more time to achieve desired property which is considered as poor performance during application.

The aqueous polychloroprene dispersion with a high rate of crystallization is commercially available. Suitable product is Dispercoll C 84 or Dispercoll C 2325 from Covestro AG.

The water-based composition according to the invention comprises 10 to 30 wt.%, preferably 15 to 22 wt.%, of at least one aqueous polychloroprene dispersion with a medium or low rate of crystallization (b), based on the total weight of the composition. If the composition comprises more than 30 wt.% of the polychloroprene dispersion (b), it dries to slow, which leads to a slower bond development. If the composition comprises less than 10 wt.% of the polychloroprene dispersion (b), drying is not up to mark. It may also cause chocking of nozzle.

The aqueous polychloroprene dispersion with a medium or low rate of crystallization is commercially available. Suitable product is Dispercoll C 74 (medium rate of crystallization) or Dispercoll C VP LS 2372/1 (low rate of crystallization) from Covestro AG.

Combination of high crystallinity polychloroprene dispersion and medium or low crystallinity polychloroprene dispersion in special amounts provides desired drying and bond development. In preferred embodiments, the amount of the polychloroprene dispersion (a) is equal to or higher than the amount of the polychloroprene dispersion (b).

In preferred embodiments, the concentration of polychloroprene in the aqueous polychloroprene dispersion (a) is from 11 to 17 wt.% and the concentration of polychloroprene in the aqueous polychloroprene dispersion (b) is from 8 to 13 wt.%, in each dispersion.

The aqueous polychloroprene dispersions (a) and (b) have viscosity of 30 to 70 mPas, measured by Brookfield viscometer, spindle 1, RPM 20 at 27°C.

Polychloroprene preparation has been known for a long time. Polychloroprene dispersions suitable for the present invention can be prepared by emulsion polymerization of chloroprene optionally containing copolymerizable ethylenically unsaturated monomers in an alkaline medium, for example as described in US 2011/0237696 A1 and US 2009/053949 A1.

The polymerization for preparing the polychloroprene is usually terminated at a monomer conversion of 50 to 95%, preferably 60 to 80%, it being possible for example phenothiazine, tert-butylpyrocatechol and/or diethylhydroxylamine to be used as an inhibitor.

After the polymerization has taken place, the remaining chloroprene monomer is preferably removed down to a residual concentration of less than 50 ppm, for example by steam distillation and/or column degassing.

The polychloroprene is preferably stored at a temperature of 50 to 110° C, preferably 60 to 100° C, particularly preferably 70 to 90° C, with the fraction insoluble in organic solvents (gel fraction) increasing by at least 10% by weight to 1 to 60% by weight, preferably to 5 to 30% by weight, particularly preferably to 10 to 20% by weight.

### Aqueous tackifier resin dispersion (c)

The water-based composition according to the present invention further comprises at least one aqueous tackifier resin dispersion (c).

In preferred embodiments, the aqueous tackifier resin dispersion is selected from hydrocarbon resins, disproportionated rosins, rosin esters, terpene resins, acrylic resins, hydrogenated rosin esters, polymerized rosin esters, dimerized rosins, acid-modified rosin esters, or mixtures thereof. In order to maintain high heat resistance, it is preferred that the resin dispersions should preferably have a softening point of 80°C or above. Acid-modified rosin esters are particularly preferred.

The water-based composition according to the present invention comprises at least one aqueous tackifier resin dispersion (c) in an amount of 10 to 30 wt.%, preferably 15 to 22 wt.%, based on the total weight of the composition. If the composition comprises the tackifier resin dispersion (c) more than 30 wt.%, it becomes too tacky which leads to nozzle chocking during application. If the composition comprises the tackifier resin dispersion (c) less than 10 wt. %, too low tackiness is achieved which leads to a slow bond development.

### Aqueous silicon dioxide dispersion (d)

The water-based composition according to the present invention further comprises at least one aqueous silicon dioxide dispersion (d). Preferably, the aqueous silicon dioxide dispersion in which SiO₂ particles have a primary particle size of from 1 to 400 nm, preferably 5 to 100 nm, particularly preferably 5 to 70 nm, can be employed.

The water-based composition according to the present invention comprises at least one aqueous silicon dioxide dispersion (d) in an amount of 15 to 45 wt.%, preferably 25 to 40 wt.%, based on the total weight of the composition. If the composition comprises more than 45 wt.% of the aqueous silicon dioxide dispersion (d), it dries too slow which leads to a slow bond development. If the composition comprises less than 15 wt.% of the silicon dioxide dispersion (d), it dries too fast which reduces the stability.

In preferred embodiments, the water-based composition according to present invention comprises:
(a) at least one aqueous polychloroprene dispersion with a high rate of crystallization in an amount of 20 to 30 wt. % based on the total weight of the composition; and/or
(b) at least one aqueous polychloroprene dispersion with a medium or low rate of crystallization in an amount of 15 to 22 wt. % based on the total weight of the composition; and/or
(c) at least one aqueous tackifier resin dispersion in an amount of 15 to 22 wt. % based on the total weight of the composition; and/or
(d) at least one aqueous silicon dioxide dispersion in an amount of 25 to 40 wt. % based on the total weight of the composition.

The water-based composition according to the present invention can further comprise at least one acrylic acid ester copolymer. Preferably, copolymers containing at least one acrylic acid, at least one acrylic acid ester and/or at least one further monomer, for example styrene, can be used. More preferably, the acrylic acid ester copolymer contains at least one acrylic acid ester and at least one further monomer, in particular styrene.

In particularly preferred embodiments, the acrylic acid ester copolymers can contain 50 to 80 wt.% of styrene and 20 to 50 wt.% of one or more acrylic acid esters of alcohols having 1 to 18 carbon atoms, preferably methyl acrylate, ethyl acrylate, propyl acrylate, butyl acrylate, 2-ethylhexyl acrylate, optionally in admixture with methacrylic acid esters such as methyl methacrylate. In can additionally contain 0 to 10 wt.% of one or more ethylenically unsaturated, functional comonomers. The weight percentages adding up to 100% by weight in each case.

In preferred embodiments, the water-based composition according to the present invention comprises at least one acrylic acid ester copolymer in an amount of 5 to 20 wt.%, more preferably 10 to 15 wt.%, based on the total weight of the composition. Higher amount of acrylic acid ester copolymer leads to a too high tackiness which causes chocking of adhesive. Lower amount of acrylic acid ester copolymer leads to a low immediate grab which leads to a slow bond development.

The water-based composition according to the present invention may optionally further comprise at least one additive, which has a good compatibility with aqueous polychloroprene dispersions. For example, the additive is selected from dispersants, adhesion promoters, wetting agents, and/or pH stabilizers. The composition may further at least one dispersant up to 1 wt.%, at least one adhesion promoter up to 2 wt.%, at least one wetting agent up to 1 wt.%, and/or at least one pH stabilizer up to 1 wt.%, based on the total weight of the composition.

In addition, zinc oxide or magnesium oxide can preferably be used as an acceptor for small amounts of hydrogen chloride, which can be split off from the chloroprene polymers, and are therefore additionally present in preferred embodiments.

In preferred embodiments, the water-based composition according to the present invention has a pH value of from 8 to 9. The pH of the composition can be adjusted by inorganic acids and/or organic acids and/or amino acids and/or their buffer systems, for example by using glycerin.

The water-based composition according to the present invention preferably has a viscosity of 20 to 100 mPas, more preferably 50 to 80 mPas, measured by Brookfield viscometer, spindle 1, RPM 20 at 27°C. The viscosity may be adjusted to suit the desired application form by adding a thickener. Suitable viscosity adjusting and thickening agents are well-known in the art.

The water-based composition according to the present invention preferably has a solid content of from 45 to 55 wt.% more preferably from 50 to 55 wt.%.

The water-based composition according to the present invention is obtainable by a process comprising at least the steps of:
(i) providing components (a) to (d), and optionally (e) and optionally at least one additive, and water; and
(ii) mixing the components to obtain the water-based composition.

The water-based composition according to the present invention may be used as an adhesive, in particular a contact adhesive. Such adhesive compositions can contain further ingredients all of which are well-known in the field.

The water-based composition according to the present invention can be used for bonding woods, papers, thermoplastics, elastomeric plastics, thermoplastic-elastomeric plastics, vulcanizates, textile fabrics, knitted fabrics, braids, leather, nylons, foams, preferably for bonding foams, in particular PU foams, memory foams, or EPE foams, woods, or nylons, more preferably in furniture application, such as for sofa or mattress application.

The adhesives bond at room temperature, with drying times in the range of 15-45 minutes, preferably 20-35 minutes, depending on the substrate.

They show high green strength and have open times of up to 48 hours, typically up to 24 hours.

The adhesives can be applied to the substrate by all known techniques, including without limitation, spraying, dip-coating, spin-coating, printing and the like, preferably by spaying for targeted thin application of contact adhesives.

The following examples are given to illustrate the present invention. Because these examples are given for illustrative purposes only, the invention should not be deemed limited thereto.

### Examples

Water-based compositions comprising the components listed in Table 1 were prepared by adding one by one with stirring.

**Table 1 (amount in wt. %)**

| | Ex 1 | Ex 2 | Ex 3 | Ex 4 | Ex 5 | Ex 6 | Ex 7 | Ex 8 | Ex 9 | Ex 10 | Ex 11 | Ex 12 |
|---|---|---|---|---|---|---|---|---|---|---|---|---|
| Dispercoll C 84 | 44.0 | 0 | 22.0 | 28.0 | 44.0 | 0 | 22.0 | 26.0 | 0 | 0 | 0 | 0 |
| Dispercoll C 74 | 0 | 44.0 | 22.0 | 17.0 | 0 | 44.0 | 22.0 | 20.0 | 0 | 0 | 0 | 0 |
| Dispecoll C 2325 | 0 | 0 | 0 | 0 | 0 | 0 | 0 | 0 | 26.5 | 25.0 | 26.5 | 25.0 |
| Dispercoll C VP LS 2372/1 | 0 | 0 | 0 | 0 | 0 | 0 | 0 | 0 | 26.5 | 18.0 | 26.5 | 18.0 |
| Dermulsene RA 702 | 20.0 | 20.0 | 20.0 | 18.0 | 18.0 | 18.0 | 18.0 | 15.0 | 20.0 | 18.0 | 20.0 | 18.0 |
| Acronal 3710 | 0 | 0 | 0 | 0 | 12.0 | 12.0 | 12.0 | 10.0 | 0 | 0 | 12.0 | 10.0 |
| Dispercoll S 5005 | 34.0 | 34.0 | 34.0 | 35.0 | 24.0 | 24.0 | 24.0 | 27.0 | 34.0 | 37.0 | 22.0 | 27.0 |
| nano ZnO | 0.6 | 0.6 | 0.6 | 0.6 | 0.6 | 0.6 | 0.6 | 0.6 | 0.6 | 0.6 | 0.6 | 0.6 |
| CP 349 | 1.0 | 1.0 | 1.0 | 1.0 | 1.0 | 1.0 | 1.0 | 1.0 | 1.0 | 1.0 | 1.0 | 1.0 |
| BYK 346 | 0.1 | 0.1 | 0.1 | 0.1 | 0.1 | 0.1 | 0.1 | 0.1 | 0.1 | 0.1 | 0.1 | 0.1 |
| glycine | 0.1 | 0.1 | 0.1 | 0.1 | 0.1 | 0.1 | 0.1 | 0.1 | 0.1 | 0.1 | 0.1 | 0.1 |
| DM water | 0.2 | 0.2 | 0.2 | 0.2 | 0.2 | 0.2 | 0.2 | 0.2 | 0.2 | 0.2 | 0.2 | 0.2 |

| | | | | | | | | | | | | |
|---|---|---|---|---|---|---|---|---|---|---|---|---|
| Dispercoll C 84: aqueous chloroprene dispersion with a high rate of crystallization (Covestro AG) Dispercoll C 74: aqueous chloroprene dispersion with a medium rate of crystallization (Covestro AG) Dispercoll C 2325: aqueous chloroprene dispersion with a high rate of crystallization (Covestro AG) Dispercoll C VP LS 2372/1: aqueous chloroprene dispersion with a low rate of crystallization (Covestro AG) Dermulsene RA 702: aqueous resin dispersion based on rosin acid (DRT) Acronal 3710: aqueous dispersion of a copolymer of styrene and an acrylic acid ester (BASF SE) Dispercoll S 5005: aqueous colloidal solution of amorphous Silicon dioxide (Covestro AG) CP 349: dispersion of chlorinated polyolefin (Eastman) BYK 346: solution of a polyether-modified polysiloxane (BYK) DM water: demineralized water | | | | | | | | | | | | |

Off white colored compositions were obtained. The compositions had no pungent smell. The properties of these compositions and their bond strength on various substrates were measured.

**Table 2 - Properties and bond strengths**

| | Ex 1 | Ex 2 | Ex 3 | Ex 4 | Ex 5 | Ex 6 | Ex 7 | Ex 8 | Ex 9 | Ex10 | Ex 11 | Ex 12 |
|---|---|---|---|---|---|---|---|---|---|---|---|---|
| Viscosity (mPas) | 45 | 65 | 52 | 70 | 45 | 65 | 52 | 70 | 70 | 75 | 52 | 70 |
| Solid (wt%) | 53.20 | 52.85 | 53.25 | 53.65 | 53.20 | 52.85 | 53.25 | 53.65 | 53.1 | 53.2 | 52.05 | 52.25 |
| pH | 8.65 | 8.8 | 8.75 | 8.55 | 8.65 | 8.8 | 8.75 | 8.55 | 8.7 | 8.7 | 8.7 | 8.64 |
| Bond strength | | | | | | | | | | | | |
| EPE foam to solid wood | 1 | 1 | 3 | 5 | 1 | 1 | 3 | 4 | 3 | 5 | 3 | 4 |
| Nylon to PU foam | 1 | 1 | 3 | 5 | 1 | 1 | 3 | 4 | 4 | 5 | 3 | 4 |
| Hardboard to Rexin | poor hold | poor hold | medium hold | good hold | poor hold | poor hold | hold | hold | good hold | good hold | hold | hold |
| EPE to PU foam | 5 | 5 | 5 | 5 | 5 | 5 | 5 | 5 | 5 | 5 | 5 | 5 |
| PU to Memory foam | 5 | 5 | 5 | 5 | 5 | 5 | 5 | 5 | 5 | 5 | 5 | 5 |
| Memory to Memory foam | 5 | 5 | 5 | 5 | 5 | 5 | 5 | 5 | 5 | 5 | 5 | 5 |

The viscosity was measured by Brookfield viscometer, spindle 1, RPM 20 at 27°C.

Process of performance (bond strength) evaluation: Thin uniform layer of adhesive was sprayed using a spray gun with 1-2 mm nozzle, with 6-8 bar pressure, with 50-60 gsm on both substrates at RT. Both substrates were pressed with each other by hand pressure. 20-30 minutes were waited for water evaporation. Then bonding was checked and results were noted.

The compositions according to the present invention comprising a blend of polychloroprene dispersion with a high rate of crystallization and aqueous polychloroprene dispersion with a medium or low rate of crystallization provide good adhesive properties and immediate wet tack to hold the applied substrate. After applied on substrates this product has good strong hold. After drying of adhesive within 20 mins, fiber tear is observed.
Bond strength value 1 in the Table 2 refers to weak fiber tear.
Bond strength value 2 to 4 in the Table 2 refers to medium fiber tear.
Bond strength value 5 in the Table 2 refers to good fiber tear.

## Claims

1. A water-based composition comprising:
(a) at least one aqueous polychloroprene dispersion with a high rate of crystallization in an amount of 15 to 35 wt. % based on the total weight of the composition;
(b) at least one aqueous polychloroprene dispersion with a medium or low rate of crystallization in an amount of 10 to 30 wt. % based on the total weight of the composition;
(c) at least one aqueous tackifier resin dispersion in an amount of 10 to 30 wt. % based on the total weight of the composition; and
(d) at least one aqueous silicon dioxide dispersion in an amount of 15 to 45 wt. % based on the total weight of the composition.

2. The water-based composition according to claim 1, wherein the amount of the polychloroprene dispersion (a) is equal to or higher than the amount of the polychloroprene dispersion (b).

3. The water-based composition according to claim 1 or 2, wherein the aqueous tackifier resin dispersion (c) is selected from hydrocarbon resins, disproportionated rosins, rosin esters, terpene resins, acrylic resins, hydrogenated rosin esters, polymerized rosin esters, dimerized rosins, acid-modified rosin esters, or mixtures thereof.

4. The water-based composition according to any one of claims 1 to 3, wherein SiO₂ particles in the aqueous silicon dioxide dispersion (d) have a primary particle size of from 1 to 400 nm, preferably 5 to 100 nm.

5. The water-based composition according to any one of claims 1 to 4, wherein the composition comprises:
(a) at least one aqueous polychloroprene dispersion with a high rate of crystallization in an amount of 20 to 30 wt. % based on the total weight of the composition; and/or
(b) at least one aqueous polychloroprene dispersion with a medium or low rate of crystallization in an amount of 15 to 22 wt. % based on the total weight of the composition; and/or
(c) at least one aqueous tackifier resin dispersion in an amount of 15 to 22 wt. % based on the total weight of the composition; and/or
(d) at least one aqueous silicon dioxide dispersion in an amount of 25 to 40 wt. % based on the total weight of the composition.

6. The water-based composition according to any one of claims 1 to 5, wherein the composition further comprises at least one acrylic acid ester copolymer.

7. The water-based composition according to claim 6, wherein the at least one acrylic acid ester copolymer contains 50 to 80 wt.% of styrene and 20 to 50 wt.% of one or more acrylic acid esters of alcohols having 1 to 18 carbon atoms.

8. The water-based composition according to claim 6 or 7, wherein the composition comprises the at least one acrylic acid ester copolymer in an amount of 5 to 20 wt.%, preferably 10 to 15 wt.%, based on the total weight of the composition.

9. The water-based composition according to any one of claims 1 to 8, wherein the composition has a solid content of from 45 to 55 wt.%, preferably 50 to 55 wt.%.

10. The water-based composition according to any one of claims 1 to 9, wherein the composition further comprises at least one additive selected from dispersants, adhesion promoters, wetting agents, and/or pH stabilizer.

11. A process for preparing a water-based composition according to any one of claims 1 to 10, comprising at least the steps of:
(i) providing components (a) to (d), and optionally (e) and optionally at least one additive, and water; and
(ii) mixing the components to obtain the water-based composition.

12. An adhesive comprising the water-based composition according to any one of claims 1 to 10.

13. The adhesive according to claim 12, wherein the adhesive is a contact adhesive.

14. Use of the water-based composition according to any one of claims 1 to 10 as adhesive, preferably contact adhesive.

15. The use according to claim 14, wherein the adhesive is for bonding woods, papers, thermoplastics, elastomeric plastics, thermoplastic-elastomeric plastics, vulcanizates, textile fabrics, knitted fabrics, braids, leather, nylons, foams, preferably for bonding foams, woods, or nylons, more preferably in furniture application.
